# EUROPEAN PATENT SPECIFICATION

(11) **EP 2 466 796 B1**
(45) Date of publication and mention of the grant of the patent: **18.02.2015**
(21) Application number: 10837020.6
(22) Date of filing: 08.12.2010
(51) Int. Cl.: H04L 12/28, H04L 29/08

(54) **USER ACCESS METHOD, SYSTEM AND ACCESS SERVER, ACCESS DEVICE**
BENUTZERZUGANGSVERFAHREN UND -SYSTEM SOWIE ZUGANGSSERVER UND ZUGANGSVORRICHTUNG
PROCÉDÉ D'ACCÈS UTILISATEUR, SYSTÈME ET SERVEUR D'ACCÈS, DISPOSITIF D'ACCÈS

(30) Priority: 15.12.2009 CN 200910254042
(43) Date of publication of application: 20.06.2012
(73) Proprietor: Huawei Technologies Co., Ltd., Shenzhen, Guangdong 518129 (CN)
(72) Inventor: GU, Dujuan, Shenzhen Guangdong 518129 (CN); GUO, Dayong, Shenzhen Guangdong 518129 (CN)
(74) Representative: Isarpatent
(86) International application number: PCT/CN2010/079559
(87) International publication number: WO 2011/072583

(56) References cited:
- CN-A- 1 758 614
- CN-A- 1 855 812
- CN-A- 1 863 199
- CN-A- 1 972 225
- CN-A- 101 047 618
- CN-A- 101 374 046
- US-A1- 2009 113 508
- US-B1- 6 538 997
- GONZALO CAMARILLO ET AL: "The 3G IP Multimedia Subsystem, Passage", 20 August 2004 (2004-08-20), 3G IP MULTIMEDIA SUBSYSTEM (IMS). MERGING THE INTERNET AND THE CELLULAR WORLDS, WILEY, GB, PAGE(S) 29 - 39,91, XP002552956, ISBN: 978-0-470-87156-0 * Chapter 5.4 *

## Description

### FIELD OF THE INVENTION

The present invention relates to the field of communications technologies, and in particular, to a user access method, system, access server, and access device.

### BACKGROUND OF THE INVENTION

In the network management, the following conditions usually occur: a network manager finds that a user using an Internet Protocol (Internet Protocol, briefly referred to as IP) address is performing malicious operations, even attacking the network, but the network manager cannot locate the user, and cannot track the user or implement visit control. When more and more complaints against network service interruption are received from users, the network manager needs to quickly find out a device on an access path affecting network services and clear the fault.

In the prior art, when users access the network by using Internet Protocol over Ethernet (Internet Protocol over Ethernet, briefly referred to as IPoE) mode based on a local area network or Point-to-Point Protocol over Ethernet (Point-to-Point Protocol over Ethernet, briefly referred to as PPPoE) mode based on a local area network, location information can be bound in a part of access devices. In this manner, the network manager can locate users on the ports of the access devices. However, the ports of the access devices access multiple users at the same time, the network manager cannot locate a specific user and cannot determine information about the entire path. When user experience is affected, the network manager needs to log in to the network devices to learn the information about each device and analyze the information. As a result, a lot of workload is wasted and the speed is slow.

The 3G IP Multimedia Subsystem, Passage, XP002552956 discloses sending a SIP REGISTER request from IMS Terminal to S-CSCF through P-CSCF and I-CSCF The SIP REGISTER request carries information of P-CSCF and I-CSCF The SIP REGISTER request is a message belongs to application layer, that is, a layer 4 message.

### SUMMARY OF THE INVENTION

Embodiments of the present invention provide a user access method, system, access server, and access device to quickly locate a user location.

An embodiment of the present invention provides a user access method, including:
receiving (101) an IPv6 access request including user information and path information; and
binding (102) the user information and the path information together, and saving the bound information;
where the path information includes information about more than one intermediate device; and the user information is added to the access request by a terminal device, the information about the more than one intermediate device is added to the IPv6 access request by the intermediate devices;
the more than one intermediate device comprises a Layer 2 intermediate device and the method comprises:
adding (302) device information to a hop-by-hop extension header of the IPv6 access request, when an interface which is of the Layer 2 intermediate device and on which a hop snooping function is enabled receives a data packet and it is determined (301), according to the data packet having the hop-by-hop extension header, that the data packet is the IPv6 access reques.

An embodiment of the present invention provides an access server, including:
a receiving module, configured to receive an access request including user information and path information; and
a binding module, configured to bind the user information and the path information; and
a saving module, configured to save the bound user information and path information.
where the path information includes information about more than one intermediate device; and the user information is added to the access request by a terminal device, the information about more than one intermediate device is added to the access requested by the intermediate devices.

An embodiment of the present invention provides an Layer 2 access device, including:
a receiving module (31), configured to receive an IPv6 data packet, where a hop snooping function is enabled on the receiving module;
a parsing module (32), configured to determine that the IPv6 data packet is an IPv6 access request according to the IPv6 data packet having a hop-by-hop extension header; and
an adding module (33), configured to add device information to the hop-by-hop extension header of the IPv6 access request.

An embodiment of the present invention provides a user access system, including:
a terminal device (41), configured to add user information to an IPv6 access request and send the IPv6 access request;
more than one intermediate device, configured to add information about the more than one intermediate device to the access request, wherein the more than one intermediate device includes a Layer 2 intermediate device and the Layer 2 intermediate device is configured to add device information to a hop-by-hop extension header of the IPv6 access request, when an interface which is of the Layer 2 intermediate device and on which a hop snooping function is enabled receives a data packet and it is determined, according to the data packet having the hop-by-hop extension header, that the data packet is the IPv6 access request; and
an access server (43), configured to receive the IPv6 access request including the user information and path information, bind the user information and the path information together,
and save the bound information; where the path information includes the information about the more than one intermediate device.

According to the embodiments of the present invention, the received access request includes the user information and path information, and the user information and the path information are bound and saved. In this way, a network manager can locate a specific user according to the bound user information and path information, and determine information about an entire path. As compared with the prior art, the workload of the network manager is reduced, speed is fast, and it can be implemented that a user location can be quickly located.

### BRIEF DESCRIPTION OF THE DRAWINGS

FIG. 1 is a flowchart of a user access method according to Embodiment 1 of the present invention;
FIG. 2 is a schematic structural diagram of a user access network according to an embodiment of the present invention;
FIG. 3 is a flowchart of a user access method according to Embodiment 2 of the present invention;
FIG. 4 is a flowchart of a user access method according to Embodiment 3 of the present invention;
FIG. 5 is a flowchart of transmitting an access request by a Layer 2 device in a user access method according to Embodiment 4 of the present invention;
FIG. 6 is a schematic structural diagram of an access server according to Embodiment 5 of the present invention;
FIG. 7 is a schematic structural diagram of an access device according to Embodiment 6 of the present invention; and
FIG. 8 is a schematic structural diagram of a user access system according to Embodiment 7 of the present invention.

### DETAILED DESCRIPTION OF THE EMBODIMENTS

The following describes the technical solutions of the present invention in detail with reference to the accompanying drawings and embodiments.

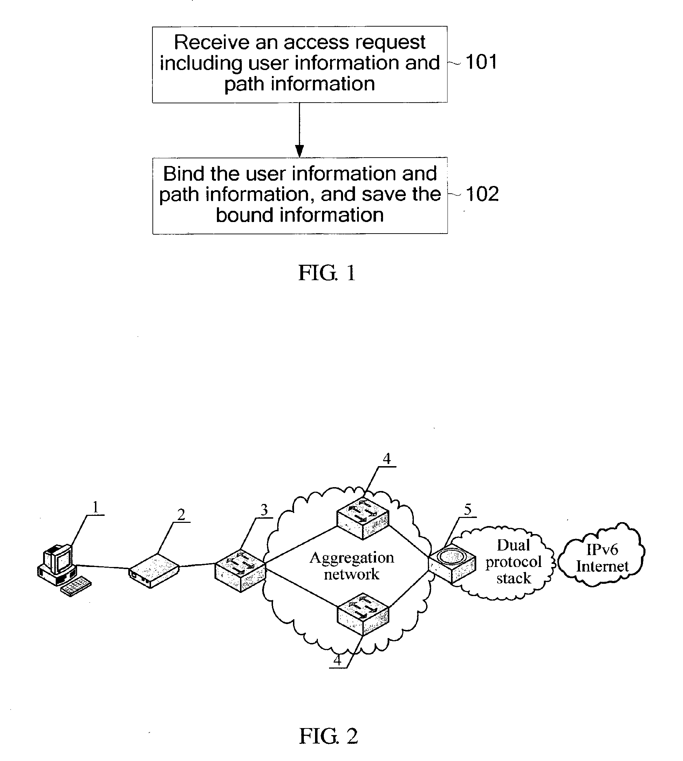

FIG. 1 is a flowchart of a user access method according to Embodiment 1 of the present invention. As shown in FIG. 1, this embodiment specifically includes the following steps:
Step 101: An access request including user information and path information is received.

The user information is added to the access request by a terminal device. The terminal device is a terminal device requesting access to the network.

The path information includes information about more than one intermediate device. The information about the more than one intermediate device is added to the access request by the more than one intermediate device. The more than one intermediate device is an intermediate device on a network which is passed through by the terminal device when the terminal device accesses the network.

Step 102: The user information and the path information are bound together, and the bound information is saved.

In this embodiment, the user information and the path information may be written into a same table, and a mapping relationship between the user information and the path information may be established in the table. Then the table is saved.

In the embodiment, the received access request includes the user information and path information, and the user information and the path information are bound together and saved. In this way, a network manager can locate a specific user according to the bound user information and path information, and determine information about an entire path. As compared with the prior art, the workload of the network manager is reduced, speed is fast, and it can be implemented that a user location can be quickly located.

FIG. 2 is a schematic structural diagram of a user access network according to an embodiment of the present invention. As shown in FIG. 2, a terminal device 1 is connected to an access node 3 through a residential gateway (Residential Gateway, briefly referred to as RG) 2; the access node 3 is connected to an aggregation switch (Aggregation Switch, briefly referred to as AGS) 4 on an aggregation network; the AGS 4 is connected to a broadband remote access server (Broadband Remote Access Server, briefly referred to as BRAS)/service router (Service Router, briefly referred to as SR) 5; and the BRAS/SR 5 is connected to an IPv6 network through a double-stack protocol.

Based on the user access network shown in FIG. 2, Embodiment 2 of the present invention provides a user access method. The RG 2, access node 3, AGS 4, and BRAS/SR5 are intermediate devices which are passed through by a terminal device when the terminal device accesses the network.

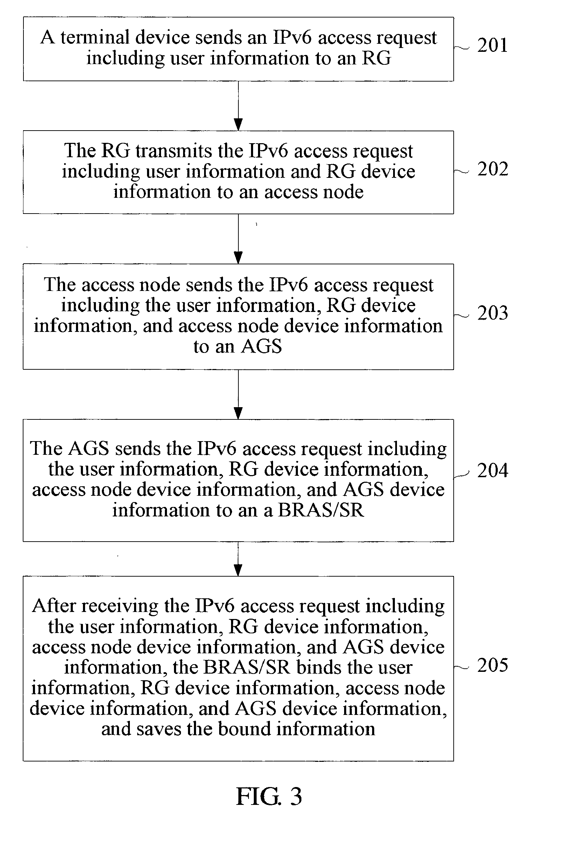

FIG. 3 is a flowchart of a user access method according to Embodiment 2 of the present invention. As shown in FIG. 3, this embodiment includes the following steps:
Step 201: A terminal device sends, to an RG, an IPv6 access request including user information.

The user information is added to the IPv6 access request by the terminal device. The IPv6 access request may be a PPPoE IPv6 packet or an IPoE IPv6 packet. The user information may be carried in a hop-by-hop extension header of the IPv6 access request.

The user information may include information such as a terminal device name, a user name and a device hardware number.

After the access request is sent, a PPPoE server or Dynamic Host Configuration Protocol (briefly referred to as DHCP) server may add an obtained network identifier to the user information, and establish a mapping relationship between the network identifier and the device hardware identifier in the user information. If any unauthorized user attacks a network by forging the network identifier subsequently, the user can be easily detected due to different device hardware identifiers, thereby enhancing network security to some extent. The network identifier includes an IP address or IPv6 address.

Step 202: The RG sends the IPv6 access request including the user information and RG device information to an access node.

After the RG receives the IPv6 access request sent by the terminal device, the RG adds the RG device information to the IPv6 access request and sends the access request.

The IPv6 access request including the user information and the RG device information may be the PPPoE or IPoE IPv6 packet. The user information and the RG device information can be carried in a hop-by-hop extension header of the IPv6 access request.

The RG device information may include a device system name, a device identifier, the quantity of device ports, an access port, access virtual local area network, an Internet protocol address of an access port of the RG, or other information.

Step 203: The access node sends the IPv6 access request including the user information, RG device information and access node device information to an AGS.

After the access node receives the IPv6 access request that is sent by the RG, the access node adds the access node device information to the IPv6 access request and sends the access request.

The IPv6 access request including the user information, RG device information, and access node device information may be the PPPoE or IPoE IPv6 packet. The user information, RG device information, and access node device information may be carried in a hop-by-hop extension header of the IPv6 access request.

The access node device information may include a device system name, a device identifier, the quantity of device ports, an access port an access virtual local area network, an Internet protocol address of the access port of the access node, or other information.

Step 204: The AGS sends the IPv6 access request including the user information, RG device information, access node device information and AGS device information to a BRAS/SR.

After the AGS receives the IPv6 access request sent by the access node, the AGS adds the AGS device information to the IPv6 access request and sends the access request.

The IPv6 access request including the user information, RG device information, access node device information, and AGS device information may be the PPPoE or IPoE IPv6 packet. The user information, RG device information, access node device information, and AGS device information may be carried in a hop-by-hop extension header of the IPv6 access request

The AGS device information includes a device system name, a device identifier, the quantity of device ports, an access port, an access virtual local area network, an Internet protocol address of an access port of the AGS, or other information.

Step 205: After the BRAS/SR receives the IPv6 access request including the user information, RG device information, access node device information and AGS device information, the BRAS/SR binds the user information, RG device information, access node device information and AGS device information together, and saves the bound information.

The RG device information, access node device information and AGS device information together constitute path information. In this step, the user information and the path information may be written into a same table, a mapping relationship between the user information and the path information may be established in the table, and then the table is saved.

A function of recording the user information and the path information of a user is as follows: the path information can be found through user searching according to the mapping relationship. Detailed information about an intermediate device can be obtained according to the path information. The quantity of users connected to a specific intermediate device and detailed user information can be obtained through device searching according to the mapping relationship between the user information and the path information, and the load of the intermediate device can be analyzed according to the user information.

In the case of finding a certain user is performing a malicious operation, a network manager can directly find out the user according to a network identifier or hardware identifier in a data packet, and obtain path information by querying the record according to the user information. In this manner, an access device used by the user can be quickly acquired, and a control on limiting the user's access is remotely and dynamically added on the access device. Such quick and effective positioning greatly reduces the workload of the network manager.

According to the user access method provided in this embodiment, the terminal device adds the user information to the access request, and each intermediate device on an access path adds its respective information to the access request, the BRAS/SR binds the user information and the path information and saves the bound information. In this way, the network manager can locate a specific user according to the bound user information and path information, and determines information about an entire path. As compared with the prior art, the workload of the network manager is reduced, speed is fast, and it can be implemented that a user location is quickly located. According to this embodiment, each intermediate device on the access path of the user can be quickly located according to the information about the intermediate device to implement security control of the user access.

According to this embodiment, the user information is added to the access request, so that the quantity of accessed users of each intermediate device can be obtained on the access network and information such as available bandwidth of a port can be analyzed and obtained according to the quantity of accessed users. In this manner, dynamic policy management is implemented on the basis of user end-to-end deployment Quality of Service (Quality of Service, briefly referred to as QoS) management and Service-Level Agreement (Service-Level Agreement, briefly referred to as SLA).

According to this embodiment, the user information and the path information are bound, so that the network manager can easily obtain access topology of the user, and does not need to obtain key configuration information about a network device by using dedicated network management protocol and does not need to perform topology detection and discovery either. Therefore, user service priority and service intensive management can be performed on the intermediate device of a path.

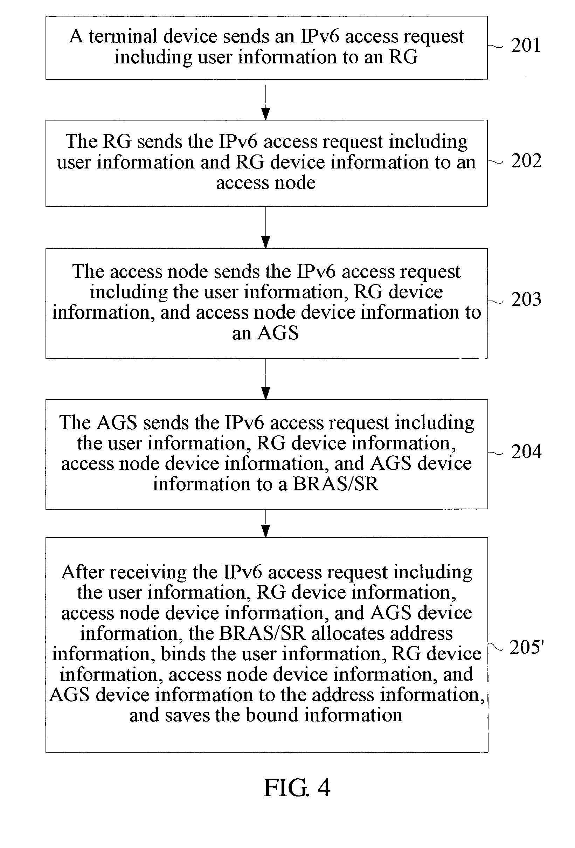

FIG. 4 is a flowchart of a user access method according to Embodiment 3 of the present invention. As shown in FIG. 4, difference between this embodiment and Embodiment 2 lies in that:
Step 205': After the BRAS/SR receives the IPv6 access request including the user information, RG device information, access node device information, and AGS device information, the BRAS/SR allocates address information, binds the user information, RG device information, access node device information, and AGS device information to the address information, and saves the bound information.

The RG device information, access node device information, and AGS device information together constitute the path information. In this step, the user information, path information, and address information may be written into a same table, a mapping relationship among the user information, path information, and address information may be established in the table, and then the table is saved. The address information indicates an address allocated by the BRAS/SR to a user. When the user goes online, the BRAS/SR can dynamically allocate and record the address information according to the path information and the user information; when the user goes offline, the BRAS/RS can delete the record.

Furthermore, in this embodiment, the BRAS/RS may also bind a policy profile to the user information, path information, and address information. The policy profile may includes a QoS priority, scheduling/security level, and specific processing modes.

Embodiments 2 and 3 provide a specific scenario where a Layer 3 intermediate device transmits the access request during a user access process. In some scenarios, a Layer 2 intermediate device may also be required to transmit the access request during the user access process. For example, in some scenarios, the Layer 2 intermediate device such as a digital subscriber line access multiplexer (Digital Subscriber Line Access Multiplexer, briefly referred to as DSLAM), an optical line terminal (Optical Line Terminal, briefly referred to as OLT), or an optical network unit (Optical Network Unit, briefly referred to as ONU) transmit the access request.

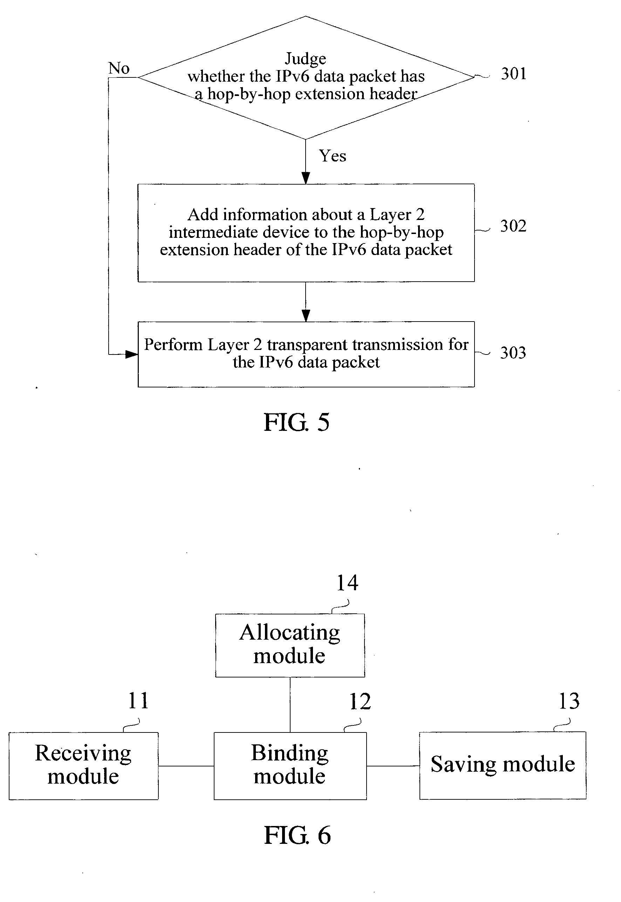

In an embodiment of the present invention, when a Layer 2 intermediate device performs Layer 2 transparent transmission, a hop snooping (HOP snooping) function may be enabled on some interfaces of the Layer 2 intermediate device, so that an interface which is of the Layer 2 intermediate device and on which the hop snooping function may be enabled can add information about the intermediate device to the access request at the network layer. Specifically, when the interface which is of the Layer 2 intermediate device and on which the hop snooping function may be enabled receives a data packet, and it is determined, according to a hop-by-hop extension header in the data packet, that the data packet is the access request, the information about the intermediate device is added to a hop-by-hop extension header of the access request,. Further, a detailed implementation manner that the Layer 2 intermediate device transmits the access request can refer to FIG. 5.

FIG. 5 is a flowchart of transmitting an access request by a Layer 2 intermediate device in a user access method according to Embodiment 4 of the present invention. In this embodiment, more than one intermediate device includes the Layer 2 intermediate device. As shown in FIG. 5, the following steps are specifically included:
Step 301: When receiving an IPv6 data packet, an interface which is of the Layer 2 intermediate device and on which a hop snooping function may be enabled judges, according to the IPv6 data packet header of the network layer, whether the IPv6 data packet has a hop-by-hop extension header; if the IPv6 data packet has the hop-by-hop extension header, step 302 is performed; otherwise, step 303 is performed.

Specifically, the judgment can be performed according to a value of a next header in the IPv6 data packet header of the network layer. If the value is 0, it is judged that the IPv6 data packet has the hop-by-hop extension header; if the value is not 0, it is judged that the IPv6 data packet has no hop-by-hop extension header.

In this step, it can be learned that the IPv6 data packet received by the Layer 2 intermediate device is an IPv6 access request, after it is judged that the IPv6 data packet has the hop-by-hop extension header.

Step 302: Intermediate device information about the Layer 2 intermediate device is added to the hop-by-hop extension header of the IPv6 data packet, and then step 303 is performed.

Step 303: Layer 2 transparent transmission is performed for the IPv6 data packet.

In this embodiment, the interface which is of the Layer 2 intermediate device and on which the hop snooping function is not enabled performs the Layer 2 transparent transmission for the received IPv6 data packet directly.

In the prior art, binding of location information in the access device depends on DHCPv6. However, the DHCPv6 is an application layer protocol, a Layer 2 intermediate device does not sense the application layer and only needs to directly perform transparent transmission. In this embodiment, when the Layer 2 intermediate device performs the Layer 2 transparent transmission, the hop snooping function can be enabled on some interfaces of the Layer 2 intermediate device, so that the Layer 2 intermediate device with the hop snooping function can add the information about the intermediate device to the hop-by-hop extension header of the network layer. The performance of the Layer 2 intermediate device is at most up to the network layer rather than further to the application layer, and an application scope is wider.

FIG. 6 is a schematic structural diagram of an access server according to Embodiment 5 of the present invention. The embodiment may be the BRAS/SR described in the method embodiments. As shown in FIG. 6, the embodiment specifically includes: a receiving module 11, a binding module 12, and a saving module 13.

The receiving module 11 is configured to receive an access request including user information and path information.

The binding module 12 is configured to bind the user information and the path information.

The saving module 13 is configured to save the bound user information and path information.

The path information includes information about more than one intermediate device; and the user information is added to the access request by a terminal device, the information about the more than one intermediate device is added to the access device by an intermediate device.

Further, the embodiment may further include an allocating module 14, configured to allocate address information.

The binding module 12 is specifically configured to bind the user information, path information, and address information. The saving module 13 is specifically configured to save the bound user information, path information, and address information.

Based on the user access network shown in FIG. 2, the receiving module 11 receives an IPv6 access request including the user information, RG device information, access node device information, and AGS device information; the binding module 12 binds the user information, RG device information, access node device information, and AGS device information; and the saving module 13 saves the bound user information, RG device information, access node device information, and AGS device information. The RG device information, access node device information, and AGS device information together constitute the path information. The binding module 12 can write the user information and the path information into a same table, and establish a mapping relationship between the user information and the path information in the table. The saving module 13 saves the table.

According to the embodiment, the received access request includes the user information and path information, and the user information and the path information are bound and saved. In this way, a network manager can locate a specific user according to the bound user information and path information, and determine information about an entire path. As compared with the prior art, the workload of the network manager is reduced, speed is fast, and it can be implemented that a user location can be quickly located.

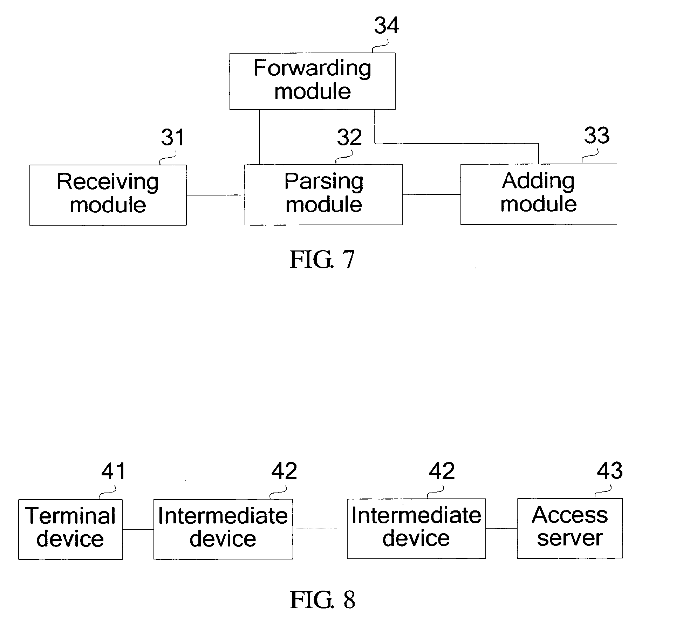

FIG. 7 is a schematic structural diagram of an access device according to Embodiment 6 of the present invention. The embodiment may be the Layer 2 intermediate device described in the method embodiments. As shown in FIG. 7, the embodiment specifically includes: a receiving module 31, a parsing module 32, and an adding module 33.

The receiving module 31 is configured to receive a data packet, where a hop snooping function is enabled on the receiving module.

The parsing module 32 is configured to determine that the data packet is the access request according to the data packet having a hop-by-hop extension header.

The adding module 33 is configured to add information about an intermediate device to the hop-by-hop extension header of the access request.

Further, the embodiment may further include a forwarding module 34, configured to perform Layer 2 transparent transmission for the access request.

In this embodiment, the hop snooping function is enabled on the interface corresponding to the receiving module 31. After receiving an IPv6 data packet, the receiving module 31 transmits the IPv6 data packet to the parsing module 32. The parsing module 32 judges whether the IPv6 data packet has a hop-by-hop extension header according to the IPv6 data packet header of the network layer; if the IPv6 data packet has the hop-by-hop extension header, the parsing module 32 determines that the IPv6 data packet is the IPv6 access request and transmits the IPv6 access request to the adding module 33; if the IPv6 data packet has no hop-by-hop extension header, the parsing module 32 transmits the IPv6 data packet to the forwarding module 34. The adding module 33 adds intermediate device information about a Layer 2 intermediate device to the hop-by-hop extension header of the IPv6 access request and transmits the IPv6 access request after the adding processing to the forwarding module 34. The forwarding module 34 may perform Layer 2 transparent transmission for the IPv6 access request sent by the adding module 33, and may also perform the Layer 2 transparent transmission for the IPv6 data packet sent by the parsing module 32.

When the access device provided in the embodiment performs the Layer 2 transparent transmission, the hop snooping function may be enabled on some interfaces. The access device having the hop snooping function may add the information about the intermediate device to a hop-by-hop extension header of a network layer. The performance of the access device is at most up to the network layer rather than further to the application layer, and an application scope is wider.

FIG. 8 is a schematic structural diagram of a user access system according to Embodiment 7 of the present invention. As shown in FIG. 8, the embodiment specifically includes a terminal device 41, more than one intermediate device 42, and an access server 43.

The terminal device 41 is configured to add user information to an access request and send the access request.

The more than one intermediate device 42 is configured to add information about an intermediate device to the access request.

The access server 43 is configured to receive an access request including user information and path information, bind the user information and the path information, and save the bound information; where the path information includes information about the more than one intermediate device.

The access server 43 may be the access server shown in FIG. 6 and the more than one intermediate device 42 may be the access device shown in FIG. 7.

According to the embodiment of the present invention, the received access request includes the user information and path information, and the user information and the path information are bound and saved. In this way, a network manager can locate a specific user according to the bound user information and path information, and determine information about an entire path. As compared with the prior art, the workload of the network manager is reduced, speed is fast, and it can be implemented that a user location can be quickly located.

Persons of ordinary skill in the art may understand that all or a part of steps according to the method embodiments may be implemented by a program instructing relevant hardware. The program may be stored in a computer readable storage medium. When the program is executed, the steps of the method embodiments are executed. The storage medium includes various mediums, such as a read-only memory (ROM), a random access memory (RAM), a magnetic disk or a compact disk read-only memory (CD-ROM), which can store program code.

Finally, it should be noted that the above embodiments are only used to describe the technical solutions of the embodiments of the present invention but are not intended to limit the technical solutions of the present invention. Although the embodiments of the present invention are described in detail with reference to the exemplary embodiments, those skilled in the art should understand that various modifications can be made to the technical solutions of the embodiments or equivalent replacements can be made to some technical features, and such modifications or equivalent replacements cannot make the essence of the corresponding technical solutions depart from the scope of the technical solutions of the embodiments of the present invention.

## Claims

1. A user access method, comprising:
receiving (101) an IPv6 access request comprising user information and path information; and
binding (102) the user information and the path information together and saving the bound information;
wherein
the path information comprises information about more than one intermediate device;
the user information is added to the access request by a terminal device, the information about the more than one intermediate device is added to the IPv6 access request by the intermediate devices; **characterized in that**
the more than one intermediate device comprises a Layer 2 intermediate device and the method comprises:
adding (302) device information to a hop-by-hop extension header of the IPv6 access request, when an interface which is of the Layer 2 intermediate device and on which a hop snooping function is enabled receives a data packet and it is determined (301), according to the data packet having the hop-by-hop extension header, that the data packet is the IPv6 access request.

2. The user access method according to claim 1, further comprising: allocating address information;
the binding the user information and path information together and saving the bound information comprising: binding the user information, path information and address information together, and saving the bound information.

3. The user access method according to claim 1, wherein the user information and the path information are carried in a hop-by-hop extension header of the access request.

4. The user access method according to claim 1, wherein
the user information comprises a terminal device name, a user name, a device hardware number, or a network identifier corresponding to the device hardware number; and
the device information comprises a device system name, a device identifier, the quantity of device ports, an access port, an access virtual local area network, or an Internet protocol address of an access port.

5. A Layer 2 intermediate device, comprising:
a receiving module (31), configured to receive an IPv6 data packet, wherein a hop snooping function is enabled on the receiving module;
a parsing module (32), configured to determine that the IPv6 data packet is an IPv6 access request according to the IPv6 data packet having a hop-by-hop extension header; and
an adding module (33), configured to add device information to the hop-by-hop extension header of the IPv6 access request.

6. The Layer 2 intermediate device according to claim 5, further comprising:
a forwarding module (34), configured to perform Layer 2 transparent transmission for the IPv6 access request.

7. A user access system, comprising:
a terminal device (41), configured to add user information to an IPv6 access request and send the IPv6 access request;
more than one intermediate device (42), configured to add information about the more than one intermediate device to the IPv6 access request, wherein the more than one intermediate device includes a Layer 2 intermediate device and the Layer 2 intermediate device is configured to add device information to a hop-by-hop extension header of the IPv6 access request, when an interface which is of the Layer 2 intermediate device and on which a hop snooping function is enabled receives a data packet and it is determined, according to the data packet having the hop-by-hop extension header, that the data packet is the IPv6 access request; and
an access server (43), configured to receive the IPv6 access request comprising the user information and path information, bind the user information and the path information together, and save the bound information, wherein the path information comprises the information about the more than one intermediate device.

## Patentansprüche

1. Benutzerzugangsverfahren, das Folgendes umfasst:
Empfangen (101) einer IPv6-Zugangsanforderung, die Benutzerinformationen und Weginformationen umfasst; und
Binden (102) der Benutzerinformationen und der Weginformationen aneinander und Sichern der gebundenen Informationen;
wobei
die Weginformationen Informationen über mehr als eine Zwischenvorrichtung umfassen;
die Benutzerinformationen zur Zugangsanforderung durch ein Endgerät hinzugefügt werden, die Informationen über die mehr als eine Zwischenvorrichtung zur IPv6-Zugangsanforderung durch die Zwischenvorrichtungen hinzugefügt werden;
**dadurch gekennzeichnet, dass**
die mehr als eine Zwischenvorrichtung eine Schicht-2-Zwischenvorrichtung umfasst und das Verfahren umfasst:
Hinzufügen (302) von Vorrichtungsinformationen zu einem "Hop-by-Hop"-Erweiterungsdateikopf der IPv6-Zugangsanforderung, wenn eine Schnittstelle, die aus der Schicht-2-Zwischenvorrichtung besteht und auf der eine Hop-Snooping-Funktion freigegeben ist, ein Datenpaket empfängt, und gemäß dem Datenpaket, das den "Hop-by-Hop"-Erweiterungsdateikopf aufweist, festgestellt wird (301), dass das Datenpaket die IPv6-Zugangsanforderung ist.

2. Benutzerzugangsverfahren nach Anspruch 1, das ferner umfasst: Zuweisen von Adresseninformationen;
wobei das Binden der Benutzerinformationen und Weginformationen aneinander und das Sichern der gebundenen Informationen umfasst: Binden der Benutzerinformationen, Weginformationen und Adresseninformationen aneinander und Sichern der gebundenen Informationen.

3. Benutzerzugangsverfahren nach Anspruch 1, wobei die Benutzerinformationen und die Weginformationen in einem "Hop-by-Hop"-Erweiterungsdateikopf der Zugangsanforderung befördert werden.

4. Benutzerzugangsverfahren nach Anspruch 1, wobei
die Benutzerinformationen einen Endgerätenamen, einen Benutzernamen, eine Vorrichtungshardwarenummer oder eine Netzwerkkennung umfassen, die der Vorrichtungshardwarenummer entspricht; und
die Vorrichtungsinformationen einen Vorrichtungssystemnamen, eine Vorrichtungskennung, die Anzahl an Vorrichtungsports, einen Zugangsport, ein virtuelles lokales Zugangsnetzwerk oder eine Internetprotokoll-Adresse eines Zugangsports umfassen.

5. Schicht-2-Zwischenvorrichtung, die umfasst:
ein Empfangsmodul (31), das konfiguriert ist, ein IPv6-Datenpaket zu empfangen, wobei eine Hop-Snooping-Funktion auf dem Empfangsmodul freigegeben ist;
ein Parsingmodul (32), das konfiguriert ist, gemäß dem IPv6-Datenpaket, das einen "Hop-by-Hop"-Erweiterungsdateikopf aufweist, festzustellen, dass das IPv6 Datenpaket eine IPv6-Zugangsanforderung ist; und
ein Hinzufügungsmodul (33), das konfiguriert ist, Vorrichtungsinformationen zum "Hop-by-Hop"-Erweiterungsdateikopf der IPv6-Zugangsanforderung hinzuzufügen.

6. Schicht-2-Zwischenvorrichtung nach Anspruch 5, die ferner umfasst:
ein Weiterleitungsmodul (34), das konfiguriert ist, eine transparente Schicht-2-Übertragung für die IPv6-Zugangsanforderung durchzuführen.

7. Benutzerzugangssystem, das Folgendes umfasst:
ein Endgerät (41), das konfiguriert ist, Benutzerinformationen zu einer IPv6-Zugangsanforderung hinzuzufügen und die IPv6-Zugangsanforderung zu senden;
mehr als eine Zwischenvorrichtung (42), konfiguriert, Informationen über die mehr als eine Zwischenvorrichtung zur IPv6-Zugangsanforderung hinzuzufügen, wobei die mehr als eine Zwischenvorrichtung eine Schicht-2-Zwischenvorrichtung umfasst und die Schicht-2-Zwischenvorrichtung konfiguriert ist, Vorrichtungsinformationen zu einem "Hop-by-Hop"-Erweiterungsdateikopf der IPv6-Zugangsanforderung hinzuzufügen, wenn eine Schnittstelle, die aus der Schicht-2-Zwischenvorrichtung besteht und auf der eine Hop-Snooping-Funktion freigegeben ist, ein Datenpaket empfängt und gemäß dem Datenpaket, das den "Hop-by-Hop"-Erweiterungsdateikopf aufweist, festgestellt wird, dass das Datenpaket die IPv6-Zugangsanforderung ist; und
einen Zugangsserver (43), der konfiguriert ist, die IPv6-Zugangsanforderung zu empfangen, die die Benutzerinformationen und Weginformationen umfasst, die Benutzerinformationen und die Weginformationen aneinander zu binden und die gebundenen Informationen zu sichern, wobei die Weginformationen die Informationen über die mehr als eine Zwischenvorrichtung umfassen.

## Revendications

1. Procédé d'accès utilisateur, comprenant :
la réception (101) d'une requête d'accès IPv6 comprenant des informations d'utilisateur et des informations de chemin ; et
la liaison (102) des informations d'utilisateur et des informations de chemin et la sauvegarde des informations liées ;
dans lequel
les informations de chemin comprennent des informations relatives à plus d'un dispositif intermédiaire ;
les informations d'utilisateur sont ajoutées à la requête d'accès par un dispositif terminal, les informations relatives aux plus d'un dispositif intermédiaire sont ajoutées à la requête d'accès IPv6 par les dispositifs intermédiaires ; **caractérisé en ce que**
les plus d'un dispositif intermédiaire comprennent un dispositif intermédiaire de Couche 2 et le procédé comprend :
l'ajout (302) d'informations de dispositif à un en-tête d'extension saut par saut de la requête d'accès IPv6, quand une interface qui est du dispositif intermédiaire de Couche 2 et sur laquelle une fonction de snooping de saut est activée reçoit un paquet de données et qu'il est déterminé (301), en fonction du paquet de données ayant l'en-tête d'extension saut par saut, que le paquet de données est la requête d'accès IPv6.

2. Procédé d'accès utilisateur selon la revendication 1, comprenant en outre :
l'attribution d'informations d'adresse ;
la liaison des informations d'utilisateur et des informations de chemin et la sauvegarde des informations liées comprennent : la liaison des informations d'utilisateur, des informations de chemin et des informations d'adresse, et la sauvegarde des informations liées.

3. Procédé d'accès utilisateur selon la revendication 1, dans lequel les informations d'utilisateur et les informations de chemin sont incluses dans un en-tête d'extension saut par saut de la requête d'accès.

4. Procédé d'accès utilisateur selon la revendication 1, dans lequel :
les informations d'utilisateur comprennent un nom de dispositif terminal, un nom d'utilisateur, un numéro de matériel de dispositif, ou un identifiant de réseau correspondant au numéro de matériel de dispositif ; et
les informations de dispositif comprennent un nom de système de dispositif, un identifiant de dispositif, la quantité de ports de dispositif, un port d'accès, un réseau local virtuel d'accès, ou une adresse de protocole Internet d'un port d'accès.

5. Dispositif intermédiaire de Couche 2, comprenant :
un module de réception (31), configuré pour recevoir un paquet de données IPv6, dans lequel une fonction de snooping de saut est activée sur le module de réception ;
un module d'analyse syntaxique (32), configuré pour déterminer que le paquet de données IPv6 est une requête d'accès IPv6 selon le paquet de données IPv6 comportant un en-tête d'extension saut par saut ; et
un module d'ajout (33), configuré pour ajouter des informations de dispositif à l'en-tête d'extension saut par saut de la requête d'accès IPv6.

6. Dispositif intermédiaire de Couche 2 selon la revendication 5, comprenant en outre :
un module d'acheminement (34), configuré pour exécuter une transmission transparente de Couche 2 de la requête d'accès IPv6 .

7. Système d'accès utilisateur, comprenant :
un dispositif terminal (41), configuré pour ajouter des informations d'utilisateur à une requête d'accès IPv6 et envoyer la requête d'accès IPv6 ;
plus d'un dispositif intermédiaire (42), configurés pour ajouter des informations relatives aux plus d'un dispositif intermédiaire à la requête d'accès IPv6, dans lequel les plus d'un dispositif intermédiaire comprennent un dispositif intermédiaire de Couche 2 et le dispositif intermédiaire de Couche 2 est configuré pour ajouter des informations de dispositif à un en-tête d'extension saut par saut de la requête d'accès IPv6, quand une interface qui est du dispositif intermédiaire de Couche 2 et sur laquelle une fonction de snooping de saut est activée reçoit un paquet de données et
qu'il est déterminé, en fonction du paquet de données ayant l'en-tête d'extension saut par saut, que le paquet de données est la requête d'accès IPv6 ; et
un serveur d'accès (43), configuré pour recevoir la requête d'accès IPv6 comprenant les informations d'utilisateur et les informations de chemin, lier les informations d'utilisateur et les informations de chemin, et sauvegarder les informations liées, dans lequel les informations de chemin comprennent les informations relatives aux plus d'un dispositif intermédiaire.
